# EUROPÄISCHE PATENTSCHRIFT

(11) **EP 1 248 823 B1**
(45) Veröffentlichungstag und Bekanntmachung des Hinweises auf die Patenterteilung: **17.03.2004**
(21) Anmeldenummer: 00983309.6
(22) Anmeldetag: 13.12.2000
(51) Int. Cl.: C09D 5/44, C08G 59/14

(54) **VERFAHREN ZUR ANODISCHEN ELEKTROTAUCHLACKIERUNG, SOWIE ELEKTROTAUCHLACKE**
METHOD FOR THE ANODIC ELECTROPHORETIC ENAMELLING AND ELECTROPHORETIC PAINTS
PROCEDE POUR LE REVETEMENT ELECTROPHORETIQUE ANODIQUE ET PEINTURES DE REVETEMENT ELECTROPHORETIQUE

(30) Priorität: 16.12.1999 DE 19960693
(43) Veröffentlichungstag der Anmeldung: 16.10.2002
(73) Patentinhaber: E.I. DU PONT DE NEMOURS AND COMPANY, Wilmington Delaware 19898 (US)
(72) Erfinder: EHMANN, Eduard, 42113 Wuppertal (DE); EVERS, Manfred, 42555 Velbert (DE); FIEBERG, Andreas, 40625 Düsseldorf (DE); MARKOU, Konstadinos, D-50739 Köln (DE); VOGT-BIRNBRICH, Bettina, 42719 Solingen (DE)
(74) Vertreter: Gille Hrabal Struck Neidlein Prop Roos
(86) Internationale Anmeldenummer: PCT/EP2000/012647
(87) Internationale Veröffentlichungsnummer: WO 2001/044382

(56) Entgegenhaltungen:
- EP-A- 0 174 628
- EP-A- 0 240 876
- EP-A- 0 379 076

## Beschreibung

Die Erfindung betrifft ein Verfahren zur Elektrotauchlackierung, welches besonders dazu geeignet ist, Überzugsfilme mit einem gewünschten Mattierungsgrad und verbessertem Kantenschutz zu erzeugen, sowie die dazu geeigneten Elektrotauchlacke.
Die Elektrotauchlackierung ist ein vollautomatisiertes, umweltfreundliches und wirtschaftliches Applikationsverfahren und findet deshalb praktische Anwendung in der Serienlackierung von elektrisch leitfähigen Oberflächen, insbesondere von Metalloberflächen. Es handelt sich dabei um ein vollautomatisiertes Applikationsverfahren mit hohem Auftragswirkungsgrad. Der Prozeß verläuft bevorzugt in geschlossenen Kreisläufen und ermöglicht die Rückführung von überschüssigem Lackmaterial sowie der eingesetzten Hilfs- und Betriebsstoffe.

Zur Verbesserung der Korrosionsbeständigkeit der Überzugsfilme werden den Elektrotauchlacken häufig korrosionsverhindernde Pigmente wie Blei- oder Chromverbindungen, beispielsweise Bleichromat, basisches Bleisilikat oder Strontiumchromat zugesetzt. Diese Verbindungen sind aber unter Gesundheits- und Umweltgesichtspunkten nicht erwünscht.

Die als weniger toxisch vorgeschlagenen Pigmente wie Zinkphosphate, Aluminiumphosphate, Zinkoxid u.a. ergeben keine befriedigenden Korrosionschutzergebnisse. Auch können die Zinkverbindungen in den Elektrotauchlackbädern zu Instabilitäten führen.

In der DE-A-43 06 024 wird deshalb der Zusatz von Lanthansalzen organischer Säuren wie beispielsweise Lanthanacetat vorgeschlagen. Hinsichtlich des Kantenschutzes können damit aber keine befriedigenden Ergebnisse erzielt werden.

In der DE-A-42 25 999 werden vernetzte Polymermikroteilchen auf Epoxidharzbasis beschrieben, die als organische Füllstoffe, Mattierungsmittel und/oder Verstärkungsmittel in gebräuchliche Elektrotauchlacke für die Grundierung von Fahrzeugkarosserien eingesetzt werden. Auch diese Elektrotauchlacke weisen keine befriedigenden Ergebnisse hinsichtlich des Kantenschutzes auf.

Die EP-A-0 240 876, EP-A-0 216 337, WO 93/07206 und EP-A-0 174 628 beschreiben die Elektrotauchlackierung mit Bädern, die einen Zusatz an Phosphorsäureepoxyestern enthalten. Letztere werden aus Epoxyverbindungen mit Phosphorsäure in Gegenwart von Wasser hergestellt. Es hat sich gezeigt, daß diese Bäder eine unzureichende Badstabilität aufweisen und daß eine relativ hohe Rücklösung des abgeschiedenen Lackmaterials in den Spülzonen der Lackieranlagen erfolgt.

Es war daher die der Erfindung zugrundeliegende Aufgabe, ein Verfahren zur anodischen Elektrotauchlackierung bereitzustellen, das diese Mängel nicht aufweist und Lackfilme mit gegenüber dem Stand der Technik verbesserten Eigenschaften, besonders hinsichtlich der Verbesserung des Kantenschutzes liefert und darüber hinaus eine beliebige Einstellung des Mattierungsgrades ermöglicht und einen guten Umgriff ergibt, wobei auch die Bäder stabil sind und die Rücklösung verringert wird.

Überraschenderweise hat sich gezeigt, daß diese Aufgabe durch Abscheidung aus wäßrigen anodischen Elektrotauchlackbädern gelöst werden kann, die eine geringe Menge an Phosphorsäure-Epoxiestern und/oder Phosphonsäure-Epoxiestern enthalten, die in Anwesenheit von Alkoholen hergestellt wurden.
Die vorliegende Erfindung betrifft dementsprechend ein Verfahren zur anodischen Elektrotauchlackierung von leitfähigen Oberflächen, insbesondere von Metalloberflächen, durch Eintauchen in ein wäßriges anodisches Elektrotauchlackbad und Schalten als Anode, das dadurch gekennzeichnet ist, daß man ein wäßriges anodisches Elektrotauchlackbad verwendet, das 1 bis 15 Gew.%, bevorzugt 5 bis 10 Gew.%, bezogen auf den Bindemittelfestkörper des Elektrotauchlackbades eines oder mehrerer Phosphorsäure-Epoxiester und/oder Phosphonsäure-Epoxiester mit einer Säurezahl von 10 bis 50 enthält, die durch Umsetzung von einer oder mehreren monomeren, oligomeren oder polymeren Epoxidverbindung(en) mit Phosphorsäure oder Phosphonsäuren oder deren Estern oder Mischungen davon in Gegenwart von einem oder mehreren Alkoholen erhalten werden. Unter Bindemittelfestkörper wird hier der Festkörpergehalt von filmbildendem Harz (Bindemittel) sowie von gegebenenfalls vorhandenem Vernetzer und Pastenharz (zum Dispergieren von Pigmenten und/oder Füllstoffen) verstanden.

Einen weiteren Gegenstand der Erfindung bildet ein wäßriges Elektrotauchlackbad mit einem Gehalt an einem oder mehreren filmbildenden Bindemitteln, sowie gegebenenfalls Vernetzern, Pigmenten, Füllstoffen, organischen Lösemitteln und/oder lacküblichen Additiven, das dadurch gekennzeichnet ist, daß es 1 bis 15 Gew.-%, bezogen auf den Bindemittelfestkörper, eines oder mehrerer Phosphorsäure-Epoxiester und/oder Phosphonsäure-Epoxiester mit einer Säurezahl von 10 bis 50 enthält, die durch Umsetzung von einer oder mehreren monomeren, oligomeren oder polymeren Epoxidverbindung(en) mit Phosphorsäure oder Phosphonsäuren oder deren Estern oder Mischungen davon in Gegenwart von einem oder mehreren Alkoholen erhalten werden.

Einen Gegenstand der Erfindung bildet auch die Verwendung der genannten Phosphorsäure-Epoxiester und/oder Phosphonsäure-Epoxiester als Additive für Elektrotauchlackbäder.

Bei der anodischen Elektrotauchlackierung (ATL) wird ein Werkstück mit elektrisch leitender Oberfläche aus Metall oder aus elektrisch leitendem Kunststoff oder aus mit einem elektrisch leitenden Überzug versehenen Substrat in ein wäßriges ATL-Bad gebracht und als Anode an eine Gleichstromquelle angeschlossen. Bei Anlegen eines elektrischen Gleichstroms wandern die, durch zumindest teilweise Salzbildung wasserlöslich oder wasserdispergierbar gemachten Polymerteilchen der wäßrigen Dispersion des ATL-Bades zur Anode und reagieren dort mit den bei der gleichzeitig ablaufenden Wasserelektrolyse entstehenden Ionen wieder zum wasserunlöslichen Polymeren, welches aus der wäßrigen Phase koaguliert und sich mit den darin dispergierten Zusatzmitteln auf der Anode als Lackfilm abscheidet. Das Prinzip der Elektrotauchlackierung ist bekannt und in der Literatur beschrieben, beispielsweise in Metalloberfläche 31 (1977) 10, Seiten 455 - 459.

Das wäßrige anodische Elektrotauchlackbad wird in üblicher Weise durch Einbringen eines anodischen Elektrotauchlacks in ein wäßriges Medium betriebsfertig hergestellt. Der Elektrotauchlack kann dabei, je nach Verwendungszweck, einkomponentig (Bindemittelkomponente pigmentiert plus gegebenenfalls Vernetzerkomponente) oder zweikomponentig (Pigmentpaste und Bindemittelkomponente sowie gegebenenfalls Vernetzerkomponente) als Konzentrat (Nachfüllmaterial) oder in mit Wasser vorverdünnter Form (Erstfüllmaterial) mit unterschiedlichen Neutralisationsgraden vorliegen.

Die Phosphorsäure- und/oder Phosphonsäure-Epoxiester können in beliebiger Weise in den fertigen Elektrotauchlack oder bei dessen Herstellung oder in das fertige Elektrotauchlackbad oder bei dessen Herstellung eingebracht werden.

Beispielsweise kann der anodische Elektrotauchlack in üblicher, dem Fachmann bekannter Weise, durch Vermischen einer oder mehrerer geeigneter Bindemittel oder Bindemitteldispersion(en) mit dem Phosphorsäure- und/oder Phosphonsäure-Epoxiester und mit gegebenenfalls einem oder mehreren Vernetzer(n) sowie gegebenenfalls üblichen Additiven und/oder Lackzusatzmitteln wie beispielsweise Katalysatoren, Lichtschutzmittel, optische Aufheller, biozide Komponenten, Neutralharze, Schichtbildner, Emulgatoren und gegebenenfalls Pigmenten und/oder Füllstoffen hergestellt werden. Der Phosphorsäure- oder Phosphonsäure-Epoxiester kann aber auch dem fertigen Elektrotauchlack und/oder dem fertigen Elektrotauchlackbad und/oder einem laufenden Elektrotauchlackbad zugesetzt werden.

Geeignete Phosphorsäure- bzw. Phosphonsäure-Epoxiester werden durch Umsetzung von einer oder mehreren monomeren, oligomeren oder polymeren Epoxidverbindung(en) mit Phosphorsäure oder Phosphonsäuren bzw. deren Ester oder mit Mischungen dieser Säuren oder deren Ester in Gegenwart eines oder mehrerer Alkohole erhalten. Beispiele sind Phosphorsäure, Phosphorsäurediethylester, Phosphorsäuretriethylester, Phosphorsäuredibutylester, Phosphorsäuretributylester, Hydroxymethanphosphonsäure, Hydroxethanphosphonsäure, Vinylphosphonsäure, Allylphosphonsäure oder Benzylphosphonsäurediethylester, bevorzugt wird o-Phosphorsäure eingesetzt. Durch die Anwesenheit von Alkoholen bei der Umsetzung entstehen zumindest teilweise Mischester mit niedrigen Säurezahlen von 10 bis 50.

Die Epoxidverbindungen besitzen im Mittel mindestens eine, vorzugweise mindestens zwei Epoxidgruppen pro Molekül und ein Epoxiäquivalentgewicht von 90 bis 4000 g/Equ., vorzugsweise von 150 bis 3500 g/Equ., besonders bevorzugt von 400 bis 3000 g/Equ.

Die Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Reaktionsbedingungen keine störenden Nebenreaktionen verursachen, wie beispielsweise Alkyl- oder Arylsubstituenten und Ethergruppierungen.

Beispiele für geeignete Epoxidverbindungen sind Kondensationsprodukte aus Epichlorhydrin und Bisphenol A, wie z.B. Epikote®-Typen von der Firma Shell, Araldite® von der Firma Ciba Geigy oder D.E.R.®-, D.E.M.®-, D.E.H.®-Typen von der Firma Dow Chemical, epoxigruppenhaltige Novolake, Glycidylether von mehrwertigen Alkoholen, Glycidylester von Polycarbonsäuren, Epoxidierungsprodukte von natürlich vorkommenden Fetten und Ölen, epoxidierte Polybutadiene oder niedermolekulare Acrylatharze mit seitenständigen Oxirangruppen. Eine ausführliche Aufzählung von für die Erfindung geeigneten Epoxidverbindungen ist in "Lackharze" von Stoye/Freitag, 1996 Carl Hanser Verlag München Wien auf den Seiten 247 bis 251 beschrieben, was hier einbezogen sein soll.

Das Verhältnis der Epoxigruppen der Epoxiverbindungen zur Anzahl der Säuregruppen der damit umzusetzenden Phosphor- bzw. Phosphonsäuren beträgt bevorzugt 1 : 1 bis 3 : 1.

Die Umsetzung der Epoxidverbindungen mit Phosphorsäure oder Phosphonsäure erfolgt in Anwesenheit eines oder mehrerer Alkohole, gegebenenfalls unter Zugabe von Lösemitteln, beispielsweise bei Temperaturen von 80 bis 110°C. Die Menge an Alkohol zur Bildung der teilweise als Mischester vorliegenden Umsetzungsprodukte wird beispielsweise so gewählt, daß der Festkörper der sich bildenden organischen Phase aus Epoxidverbindung, Phosphorsäure oder Phosphonsäure bzw. deren Derivaten und Alkohol vor der chemischen Umsetzung in einem Bereich von vorzugsweise 65 bis 85 Gew.-%, besonders bevorzugt von 70 bis 80 Gew.-% liegt. Es kann z.B. unter schwachem Rückfluß gearbeitet werden. Die Bildung der Mischester erfolgt vorzugsweise in Abwesenheit von Wasser. Es wird bis zu einer Säurezahl von 10 bis 50, bevorzugt von 15 bis 40 umgesetzt. Das Umsetzungsprodukt kann in eine wäßrige Dispersion überführt werden. Dazu kann zur Neutralisation der freien Säurefunktionen ein Neutralisationmittel zugesetzt und mit vollentsalztem Wasser auf den gewünschten Festkörpergehalt verdünnt werden, wobei beispielsweise mindestens 50 % der freien Säurefunktionen in die Salzform überführt werden.

Geeignete Alkohole sind beispielsweise aliphatische Alkohole, z.B. niedere aliphatische Alkohole mit 1 bis 6 Kohlenstoffatomen, wie n-Butanol, tert-Butanol, sec-Butanol, Isopropanol, n-Propanol, Methanol, Ethanol und/oder Hexanol.

Geeignete Lösemittel die bei der Umsetzung mitverwendet werden können sind Ester, Ether, Ketone und Aromaten.

Als Neutralisationsmittel eignen sich übliche Basen, wie sie auch bei der Herstellung der anodischen Elektrotauchlacke verwendet werden können, wie beispielsweise NaOH KOH, LiOH, Ammoniak, primäre, sekundäre und tertiäre Amine wie Diethylamin, Triethylamin, Morpholin; Alkanolamine wie Diisopropanolamin, Dimethylaminoethanol, Triisopropanolamin, Dimethylamino-2-methylpropanol; quarternäre Ammoniumhydroxide oder auch Mischungen derartiger Neutralisationsmittel.

Als geeignete Bindemittel für die anodischen Elektrotauchlacke können alle üblichen Bindemittelsysteme, z.B. mit einer Säurezahl von 20 bis 150, bevorzugt von 20 bis 120 und einer Hydroxylzahl von 0 bis 150, bevorzugt von 20 bis 120 Verwendung finden, wie sie für wäßrige Beschichtungssysteme, speziell für anodische Elektrotauchlackbeschichtungen üblich sind.

Dazu gehören beispielsweise Polyester-, Polyacrylat- und Polyurethanharze, wie z.B. Alkydharze, urethanisierte Polyesterharze oder acrylierte Polyester- oder Polyurethanharze, maleinisierte Öle, Epoxiester, maleinisiertes Polybutadienöl sowie Mischungen dieser Harze. Bevorzugt sind es Polyesterharze.

Geeignete Polyesterharze sind beispielsweise carboxylgruppen- und hydroxylgruppenhaltige Polyester mit einer Säurezahl von 20 bis 150 und einer Hydroxylzahl von 20 bis 150. Sie werden. nach den dem Fachmann bekannten Verfahren, durch Polykondensation von mehrwertigen Alkoholen und mehrwertigen Carbonsäuren oder Carbonsäureanhydriden, sowie gegebenfalls aliphatischen und/oder aromatischen Monocarbonsäuren hergestellt. Der Carboxyl- und Hydroxylgruppengehalt wird in an sich bekannter Weise durch geeignete Wahl der Art und Mengenverhältnisse der Ausgangskomponenten eingestellt. Die Carboxylgruppen können beispielsweise durch Halbesterbildung aus einem vorgefertigten, Hydroxylgruppen aufweisenden Polyesterharz mit Säureanhydriden eingeführt werden. Der Einbau von Carboxylgruppen kann beispielsweise auch durch Mitverwendung von Hydroxycarbonsäuren bei der Polykondensationsreaktion erfolgen.

Zur Polykondensation geeignete Polycarbonsäuren, insbesondere Dicarbonsäuren, und Polyole können beispielsweise aliphatisch, cycloaliphatisch oder aromatisch sein.

Die zur Herstellung der Polyester verwendeten Polyole sind beispielsweise Diole wie Alkylenglykole, wie beispielsweise Ethylenglykol, Butylenglykol, Hexandiol, hydriertes Bisphenol A, 2,2,-Butylethylpropandiol, Neopentylglykol und/oder andere Glykole wie beispielsweise Dimethylolcyclohexan. Es können auch höherfunktionelle oder Gemische aus mono- und höherfunktionellen OH-Komponenten wie beispielsweise Trimethylolpropan, Pentaerythrit, Glycerin, Hexantriol; Polyetherpolyole, die Kondensate von Glykolen mit Alkylenoxiden sind; Monoether solcher Glykole, wie Diethylenglykolmonoethylether, Tripropylenglykolmonomethylether, eingesetzt werden.

Die Säurekomponenten des Polyesters bestehen bevorzugt aus niedermolekularen Dicarbonsäuren oder ihren Anhydriden mit 2 bis 18 Kohlenstoffatomen. Geeignete Säuren sind beispielsweise Phthalsäure, Isophthalsäure, Terephthalsäure, Hexahydrophthalsäure, Adipinsäure, Azelainsäure, Sebazinsäure, Fumarsäure, Maleinsäure, Glutarsäure, Bernsteinsäure, Itaconsäure und/oder 1,4-Cyclohexandicarbonsäure. Anstelle dieser Säuren können auch ihre Methylester oder Anhydride, soweit diese existieren, verwendet werden. Es ist auch möglich, um verzweigte Polyester zu erhalten, Anteile an höherfunktionellen Carbonsäuren zuzusetzen, wie beispielsweise trifunktionelle Carbonsäuren, wie Trimellithsäure, Apfelsäure, Aconitsäure, Bishydroxyethyltaurin sowie Dimethylolpropionsäure, Dimethylolbuttersäure oder Bisanhydride. Polycarbosäuren, die keine cyclischen Anhydride bilden sind bevorzugt.

Die Polyesterharze können beispielsweise auch durch den Einbau von ungesättigten Verbindungen, Isocyanatgruppen enthaltenden Verbindungen oder durch Schoß- oder Pfropfpolymerisation mit ethylenisch ungesättigten Verbindungen modifiziert werden. Bevorzugte Polyester sind beispielsweise carboxylgruppenhaltige Polyester mit einer Säurezahl von 20 bis 120 und einer Hydroxylzahl von 20 bis 150, bevorzugt von 60 bis 120. Sie sind beispielsweise Umsetzungsprodukte aus zwei- und/oder mehrwertigen aliphatischen oder cycloaliphatischen gesättigten Alkoholen, aliphatischen, cycloaliphatischen und/oder monocyclischen aromatischen zwei- oder mehrbasischen Polycarbonsäuren und gegebenenfalls linearen oder verzweigten, gesättigten oder ungesättigten aliphatischen und/oder cycloaliphatischen C3- bis C20-Monoalkoholen oder Monocarbonsäuren. Die Mengenverhältnisse der Ausgangskomponenten errechnen sich aus den Molverhältnissen, die zu den gewünschten Säurezahlen und Hydroxylzahlen des Harzes führen. Die Auswahl der einzelnen Ausgangskomponenten ist dem Fachmann unter Berücksichtigung der Zielsetzung geläufig.

Das zahlenmittlere Molgewicht Mn der verwendbaren Polyesterharze, gemessen gegen Polystyrol als Eichsubstanz, liegt beispielsweise bei 1000 bis 6000, vorzugsweise bei 2000 bis 4000.

Gemäß einer bevorzugten Ausftihrungsform werden carboxylgruppenhaltige ölfreie Polyester eingesetzt, wie sie z.B. in der DE-A-32 47 756 beschrieben sind. Diese Polyester enthalten vorzugsweise 0,3 bis 3,0 , besonders bevorzugt 0,5 bis 2,5 Milläquivalente aliphatische, cycloaliphatische und/oder aromatische Dicarbonsäuren pro Gramm Harz einkondensiert. Bevorzugt sind drei- oder mehrbasische cyclische Carbonsäuren in einer Menge von 0,8 bis 2,0, vorzugsweise 0,9 bis 1,8, besonders bevorzugt 1,1 bis 1,5 Millimol pro Gramm Harz über nur eine Carboxylgruppe an den Polyester gebunden. Als Polycarbonsäuren können drei- und/oder mehrbasische Polycarbonsäuren eingesetzt werden, vorzugsweise drei und/oder vierbasische Säuren. Die Herstellung dieser Polyester erfolgt in an sich bekannter Weise durch Polykondensation der Ausgangsstoffe, wobei zur Vermeidung von Trübungen und Gelbildungen bevorzugt stufenweise gearbeitet wird.

Bei dieser bevorzugten Ausführungsform erfolgt die Veresterung von bevorzugt aromatischen und cycloaliphatischen Dicarbonsäuren die kein intramolekulares Anhydrid bilden können, bevorzugt mit Dialkoholen, die entweder sekundäre OH-Gruppen oder durch β-Substitution sterisch behinderte primäre OH-Gruppen enthalten, wobei durch Alkoholüberschuß ein OH-gruppenhaltiger Polyester entsteht. Die Alkohole enthalten vorzugsweise 2 bis 21 C-Atome, besonders bevorzugt 4 bis 8 C-Atome. Die Dicarbonsäuren enthalten vorzugsweise 5 bis 10 C-Atome, besonders bevorzugt 6 C-Atome.

Beispiele hierfür sind Isophthalsäure, Terephthalsäure, 1,3- und 1,4-Cyclohexandicarbonsäure oder alkylsubstituierte Dicarbonsäuren wie Butylisophtalsäure. Besonders bevorzugt wird Isophthalsäure.

Andererseits können auch Dimethylester wie Terephthalsäuredimethylester oder 1,4-Cyclohexandicarbonsäuredimethylester durch Umesterung, gegebenenfalls in Gegenwart von Umesterungskatalysatoren, in den Polyester eingerührt werden.
Zum Erzielen von Verzweigungen kann anstelle eines Teils der Dicarbonsäuren eine entsprechende Menge Tricarbonsäure wie Trimellithsäureanhydrid in das Harzmolekül einkondensiert werden.

Als Dialkohole werden für die bevorzugte Ausführungsform beispielsweise Neopentylglykol, Hydroxypivalinsäureneopentylglykolester, Hexandiol-2,5, 1,4-Bis(hydroxymethyl)cyclohexan, 1,1-Isopyrilidin-bis-(p-phenoxy)-2-propanol, 2,2,4-Trimethylolpentandiol-1,3 eingesetzt, sowie Gemische davon. Als Dialkohol kann beispielsweise auch der Glycidester von α-verzweigten Fettsäuren, wie Versaticsäure, verwendet werden, weil die Fettsäure hydrolysestabil in den Molekülverband eingebaut ist. Es ist auch der Einsatz von Epoxidharzen möglich, deren Epoxigruppen mit Monoalkoholen umgesetzt worden sind.

Bei der bevorzugten Ausführungsform ist ein anteilweiser Einsatz von Polyolen mit mehr als zwei OH-Gruppen wie Trimethylolpropan oder Pentaerythrit zum Einstellen geeigneter Hydroxylzahlen und Viskositäten möglich. Das gleiche gilt auch zur Elastifizierung durch eine geringfügige Modifizierung mit langkettigen Dialkoholen wie Hexandiol-1,6 oder von aliphatischen Dicarbonsäuren wie Adipinsäure.

Bei der bevorzugten Ausführungsform, sowie auch allgemein kann die Veresterung (erste Stufe) in bekannter Weise azeotrop oder in der Schmelze bei erhöhter Temperatur (z.B. über 190°C) vorgenommen werden und liefert ein klares Produkt mit einer Säurezahl von beispielsweise 0 bis 50, bevorzugt von 5 bis 25 und beispielsweise einer Viskosität von 200 bis 3000 mPas, gemessen bei 25°C in einer 75 %igen Butylglykollösung.

Um bei der bevorzugten Ausführungsform, sowie auch generell, die Löslichkeit im wäßrigen alkalischen Medium zu ermöglichen, können in die OH-gruppenhaltigen Polyester zusätzlich Carboxylgruppen eingeführt werden. Dazu erfolgt beispielsweise eine Umsetzung mit einer beispielsweise aromatischen oder cycloaliphatischen Dicarbonsäure, die bevorzugt durch Defunktionalisierung mit einem langkettigen, aliphatischen hydrophoben Monoalkohol aus einer Polycarbonsäure mit drei oder vier Carboxylgruppen wie beispielsweise Trimesinsäure, Hemellithsäure, Prehnitsäure und Mellophansäure entstanden ist. Besonders einfach gestaltet sich das Verfahren bei Einsatz von anhydridhaltigen Verbindungen wie Trimellithsäureanhydrid, Pyromellithsäureanhydrid oder entsprechenden hydrierten Ringsystemen, sowie Cyclopentantetracarbonsäueanhydrid oder Pyrazintetracarbonsäureanhydrid. Die Umsetzung kann beispielsweise bei Temperaturen unter 190°C durchgeführt werden.

Als Monoalkohole können beispielsweise eingesetzt werden geradkettige und/oder verzweigte gesättigte und/oder ungesättigte primäre, sekundäre und/oder tertiäre, bevorzugt primäre und/oder sekundäre Alkohole. Es können auch Gemische insbesondere isomere Gemische dieser Alkohole eingesetzt werden. Bevorzugt sind aliphatische C6- bis C18-Monoalkohole sowie Benzylalkohol und seine Alkylsubstitutionsprodukte.
Besonders bevorzugt werden verzweigtkettige C8- bis C13-iso-Monoalkohole. Besonders hydrolysestabile Halbester werden durch Verwendung von α-verzweigten Monoalkoholen oder sekundären Monoalkoholen wie Cyclohexanol oder sekundärem Methyloctylalkohol erhalten. Durch den Aufbau des Harzes wird gewährleistet, daß gegebenenfalls durch Hydrolyse entstehende Spaltprodukte (Monoalkohol und Trimellithsäure-Monoester) ohne Störungen elektrophoretisch mit dem Film abgeschieden werden.

Die Polycarbonsäuren können beispielsweise in einem Zweitopfverfahren stöchiometrisch mit soviel Monoalkohol umgesetzt werden, daß eine Dicarbonsäure erhalten bleibt, die anschließend zu dem OH-gruppenhaltigen Polyester, beispielsweise bei Temperaturen von etwa 150 bis 190°C, zugegeben wird.

In der Praxis hat sich die Herstellung des carboxylgruppenhaltigen Polyesters im Eintopfverfahren bewährt, indem zu dem OH-Gruppen-haltigen Polyester die etwa stöchiometrischen Mengen von Monoalkohol und anhydridgruppenhaltiger Verbindung, wie Trimellithsäureanhydrid in der angegebenen Reihenfolge zugegeben werden.

Der Einbau von Carboxylgruppen kann auch beispielsweise durch Mitverwendung von Hydroxycarbonsäuren wie z.B. Dimethylolpropionsäure bei der Polykondensationsreaktion erfolgen, deren freie Carboxylgruppe im allgemeinen wegen der sterischen Hinderung nicht an der Polykondensationsreaktion teilnimmt, so daß der Einbau dieser Säure ausschließlich über die Hydroxylgruppen stattfindet.

Die Molverhältnisse der Gesamtrezeptur zur Herstellung des Polyesters können so gewählt werden, daß eine für den jeweiligen Anwendungszweck geeignete Viskosität erreicht wird. Sie beträgt beispielsweise etwa 200 bis 3000, bevorzugt 250 bis 2000 und besonders bevorzugt 300 bis 1500 mPas, gemessen 50%ig in Butylglykol bei 25°C. Sie kann ebenso wie das Molekulargewicht durch Mischen von Harzen mit niedrigerer und höherer Viskosität bzw. niedrigerem und höherem Molekulargewicht eingestellt werden. Die obere Grenze der Säurezahl liegt bevorzugt unter 100, besonders bevorzugt unter 60; die untere Grenze der Säurezahl liegt bevorzugt über 35, besonders bevorzugt über 40. Der carboxylgruppenhaltige Polyester enthält mindestens eine, bevorzugt mindestens zwei Carboxylgruppen pro Molekül, um die Wasserverdünnbarkeit durch Salzbildung mit einer niedrigmolekularen Base zu erzielen. Ist die Säurezahl zu gering, so kann die Löslichkeit unzureichend sein; ist sie zu hoch, so kann die hohe Neutralisation eine verstärkte Elektrolyse im ATL-Bad bewirken, die zu Oberflächenstörungen führen kann. Der gewählte Alkoholüberschuß ergibt im fertigen Harz beispielsweise eine Hydroxylzahl von etwa 20 bis 150, bevorzugt von 60 bis 120. Es werden Harze bevorzugt, die bei niedriger Säurezahl eine relativ hohe Hydroxylzahl aufweisen.

Die Polykondensation erfolgt beispielsweise azeotrop oder in der Schmelze, beispielsweise bei Reaktionstemperaturen zwischen 160 und 240°C, bevorzugt zwischen 160 und 210°C. Nach Erreichen der gewünschten Endwerte bezüglich Viskosität und Säurezahl wird auf eine Temperatur abgekühlt bei der das Produkt eine Viskosität hat, die eine Einarbeitung von Wasser erlaubt. In der Praxis bedeutet das, daß die Schmelzviskosität im allgemeinen nicht über 40000mPas liegt. Sofern nicht unter Druck gearbeitet wird, sind das beispielsweise Temperaturen bis zu etwa 100°C. Zur Überführung in eine wäßrige Lösung oder Dispersion werden die Carboxylgruppen des Polykondensationsproduktes zumindest teilweise durch Zugabe von Neutralisationsmittel neutralisiert. Das Neutralisationsmittel kann vor oder während der Wasserzugabe zugefügt werden, es kann aber auch in dem Wasser vorgelegt werden, in dem das Polykondensationsprodukt dispergiert wird. Dabei werden beispielweise schnellaufende Rührscheibengeräte, Rotor-/Stator-Mischer oder Hochdruckhomogenisatoren verwendet. Bei oder nach der Überführung in die wäßrige Lösung oder Dispersion können gegebenenfalls organische Lösemittel destillativ entfernt werden.

Als Neutralisationsmittel eignen sich übliche Basen wie beispielsweise NaOH, KOH, LiOH, Ammoniak, primäre, sekundäre und tertiäre Amine wie Diethylamin, Triethylamin, Morpholin; Alkanolamine wie Diisopropanolamin, Dimethylaminoethanol, Triisopropanolamin, Dimethylamino-2-methylpropanol; quarternäre Ammoniumhydroxide oder gegebenenfalls auch geringe Mengen an Alkylenpolyaminen wie Ethylendiamin. Es können auch Mischungen derartiger Neutralisationsmittel verwendet werden.

Die Menge an Neutralisationsmittel wird beispielsweise so gewählt, daß sich ein MEQ-Wert von 15 bis 90, bevorzugt von 20 bis 60 Milliequivalent Amin pro 100 g Festharz.

Als Bindemittel für die Elektrotauchlacke geeignete Polyacrylatharze sind beispielsweise carboxylgruppenhaltige und/oder sulfongruppenhaltige Copolymerisate mit einer Säurezahl von 20 bis 150. Das zahlenmittleren Molekulargewicht Mn beträgt beispielsweise von 1000 bis 10000.

Ihre Herstellung erfolgt nach üblichen Verfahren durch Copolymerisation von olefinisch ungesättigten Monomeren, wobei Säuregruppen aufweisende Monomere mit weiteren Monomeren copolymerisiert werden. Die Mitverwendung der Säuregruppen aufweisenden Monomeren erfolgt zwecks Einbau von Carboxyl- und/oder Sulfonsäuregruppen in die Coplymerisate um nach zumindestens teilweiser Neutralisation dieser Gruppen die Wassserlöslichkeit oder Wasserdispergierbarkeit der Copolymeren zu gewährleisten.

Geeignete Säuregruppen aufweisende Monomere sind im Prinzip alle olefinisch ungesättigten polymerisierbaren Verbindungen, die mindestens eine Carboxyl- und/oder Sulfonsäuregruppe aufweisen, wie beispielsweise olefinisch ungesättigte Mono- oder Dicarbonsäuren wie (Meth)acrylsäure, Crotonsäure, Fumarsäure, Maleinsäure, Itaconsäure oder die Halbester von Fumarsäure, Maleinsäure und Itaconsäure oder Sulfonsäuregruppen aufweisende olefinisch ungesättigte Verbindungen wie beispielsweise 2-Acrylamido-2-methylpropansulfonsäure oder beliebige Gemische derartiger olefinisch ungesättigter Säuren. Besonders bevorzugt sind Acrylsäure und Methacrylsäure.

Zur Erzielung von gewünschter. anwendungstechnischen Eigenschaften im fertigen Lack können die Copolymerisate neben den Säuregruppen aufweisenden Monomeren weitere, funktionelle Gruppen aufweisende Monomere enthalten, mit denen sich z.B. Vernetzungsreaktionen durchführen lassen. Dabei kann sowohl Selbstvernetzung der Copolymerisate als auch Fremdvemetzung mit anderen, zusätzlich in den Lack eingebrachten Komponenten erfolgen. Desweiteren können bei der Herstellung der Copolymerisate im Prinzip alle nichtfunktionellen olefinisch ungesättigten Monomeren mitverwendet werden.

Beispiele für derartige funktionelle Gruppen sind Hydroxy-, Amino-, Amido-, Keto-, Aldehyd-, Lactam-, Lacton-, Isocyanat-, Epoxi- und Silangruppen. Olefinisch ungesättigte Monomere die derartige funktionelle Gruppen tragen sind bekannt. Bevorzugt sind Hydroxy- und Epoxigruppen.

Geeignete nicht-funktionelle Monomere sind beispielsweise Ester der Acryl- und Methacrylsäure, deren Alkoholkomponenten 1 bis 18 C-Atome aufweisen, Vinylaromaten, Vinylester von aliphatischen Monocarbonsäuren, Acryl- und Methacrylnitril.

Die Herstellung der Copolymerisate kann durch Polymerisation nach üblichen Verfahren durchgeführt werden. Vorzugsweise erfolgt die Herstellung der Copolymerisate in organischen Lösemitteln. Möglich sind dabei kontinuierliche oder diskontinuierliche Polymerisationsverfahren.

Als Lösemittel kommen Aromaten, Ester, Ether und Ketone in Betracht. Bevorzugt werden Glykolether eingesetzt.

Die Copolymerisation erfolgt beispielsweise bei Temperaturen zwischen 80 und 180°C unter Verwendung von üblichen Initiatoren wie beispielsweise aliphatischen Azoverbindungen oder Peroxiden. Zur Regulierung des Molekulargewichts der Copolymeren können übliche Regler eingesetzt werden. Nach beendeter Polymerisation können die Copolymerisate, wie bei den Polykondensationsharzen beschrieben, neutralisiert und in eine wäßrige Lösung oder Dispersion überführt werden, wobei gegebenenfalls das organische Lösemittel abdestilliert werden kann. Beispiele für basische Neutralisationsmittel sind die vorstehend zur Neutralisation der Polyesterharze beschriebenen.

Als Bindemittel für die Elektrotauchlacke geeignete Polyurethanharze sind beispielsweise anionische Polyurethanharze, die in Salzform vorliegende Carboxyl-, Sulfonsäure und/oder Phosphonsäuregruppen enthalten. Sie werden in an sich bekannter Weise aus Polyolen, Polyisocyanaten und gegebenenfalls Kettenverlängerungsmitteln hergestellt.

Die Polyurethanharze können sowohl in Substanz als auch in organischen Löserniteln, die nicht mit Isocyanaten reagieren können, hergestellt werden. Sie werden, wie bei den Polykondensationsharzen beschrieben, nach Neutralisation der Säuregruppen in die wäßrige Phase überführt. Es ist auch möglich, die Polyurethanharze stufenweise herzustellen.

So ist es z.B. möglich, zunächst ein Prepolymeres mit Säuregruppen und endständigen Isocyanatgruppen in organischen Lösemitteln herzustellen, welches, nach Neutralisation der Säuregruppen mit tertiären Aminen, kettenverlängert und in die wäßrige Phase überführt wird, wobei die organischen Lösemittel destillativ entfernt werden können.

Die zur Herstellung des Prepolymeren eingesetzten Polyole können nieder und/oder hochmolekular sein und auch anionische Gruppen aufweisen.

Niedermolekulare Polyole haben bevorzugt eine zahlenmittlere Molmasse Mn von 60 bis 400 und können aliphatische, alicyclische oder aromatische Gruppen enthalten. Sie können beispielsweise bis zu 30 Gew.% der gesamten Polyolbestandteile eingesetzt werden.

Geeignete niedermolekulare Polyole sind beispielsweise Diole, Triole und Polyole wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Pentaerythrit, 1,2-Cyclohexandiol, 1,4-Cyclohexandimethanol, Bisphenol A, Bisphenol F, hydriertes Bisphenol A sowie Mischungen aus diesen Polyolen.

Hochmolekulare Polyole bestehen aus linearen oder verzweigten Polyolen mit einer OH-Zahl von 30 bis 150. Sie können beispielsweise bis zu 97 Gew.% der gesamten Polyolbestandteile eingesetzt werden. Bevorzugt handelt es sich dabei um gesättigte oder ungesättigte Polyester- und/oder Polyetherdiole und/oder Polycarbonatdiole mit einer zahlenmittleren Molmasse Mn von 400 bis 5000 oder deren Mischungen.

Geeignete lineare oder verzweigte Polyetherdiole sind beispielsweise Poly(oxyethylen)glykole, Poly(oxypropylen)glykole und/oder Poly(oxybutylen)glykole.

Polyesterdiole sind bevorzugt und werden in bekannter Weise durch Veresterung von Dicarbonsäuren oder ihren Anhydriden mit Diolen hergestellt. Um verzweigte Polyester herzustellen, können in geringem Umfang auch Polyole oder Polycarbonsäuren mit einer höheren Funktionalität eingesetzt werden.

Die zur Anionenbildung befähigten Gruppen können aus dem Polyester stammen oder sie werden in das Prepolymere durch Mitverwendung von Verbindungen eingebracht, die zwei mit Isocyanatgruppen reagierende H-aktive Gruppen und mindestens eine zur Anionenbildung befähigte Gruppe aufweisen. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind beispielsweise Carboxyl-, Sulfonsäure- und/oder Phosphonsäuregruppen. Beispiele für solche Verbindungen sind Dihydroxycarbonsäuren, wie Dihydroxypropionsäure, Dihydroxybuttersäure, Dighydroxybernsteinsäure, Diaminobemsteinsäure und bevorzugt α,α-Dimethylolalkansäuren wie z.B. Dimethylolpropionsäure.

Als Polyisocyanate eignen sich aliphatische, cycloaliphatische und/oder aromatische Polyisocyanate mit mindestens zwei Isocyanatgruppen pro Molekül und die an sich bekannten Biuret-, Allophanat-, Urethan- und/oder Isocyanuratgruppen aufweisenden Derivate dieser Diisocyanate sowie Mischungen dieser Polyisocyanate. Bevorzugt werden die Isomeren oder Isomerengemische von organischen Diisocyanaten eingesetzt.

Die zur Herstellung des Prepolymeren eingesetzte Polyisocyanatkomponente kann auch geringe Anteile an höherfuktionellen Polyisocyanaten enthalten.

Die Herstellung des Prepolymeren wird zweckmäßigerweise in Gegenwart von Katalysatoren wie z.B. Organozinnverbindungen oder tertiären Aminen durchgeführt.

Die Überführung des Polyurethanharzes in die wäßrige Phase erfolgt, wie bei den Polyesterharzen beschrieben, nach Neutralisation der Säuregruppen des Polyurethanharzes mit einem basischen Neutralisationsmittel, gegebenenfalls unter destillativer Entfernung von organischen Lösemitteln.

Beispiele für basische Neutralisationsmittel sind die vorstehend zur Neutralisation der Polyesterharze beschriebenen.

Die Vernetzung der in den erfindungsgemäß verwendeten Elektrotauchlacken enthaltenen Bindemittel erfolgt vorzugsweise beim Einbrennen durch Reaktion mit einem Vernetzer. Üblicherweise werden Vernetzer separat zugesetzt; selbstverständlich können die Bindemittel auch reaktive funktionelle Gruppen enthalten, die zu einer Selbstvernetzung führen. Als Vernetzer bzw. vernetzende Komponente können dem Fachmann geläufige eingesetzt werden. Beispiele sind Aminoplastharze, insbesondere Melamin-Formaldehydharze; Phenoplastharze; blockierte Polyisocyanate oder Umesterungsvernetzer wie Polyester oder Polyurethanester mit Hydroxyalkylestergruppen, Acetessigsäure- oder Malonsäure-Alkylesterderivate. Tris(alkoxycarbonylamino)triazinderivate und Mischungen aus diesen Komponenten, die mit oder ohne Einwirkung von Katalysatoren hochvernetzte Beschichtungen ergeben können. Melaminharze und blockierte Polyisocyanate werden bevorzugt.

Die blockierten Polyisocyanate enthalten im Mittel mehr als eine Isocyanatgruppe, bevorzugt mindestens zwei Isocyanatgruppen pro Molekül. Sie sollen in der wäßrigen Phase bei etwa neutralem bis schwach basischem pH-Wert lagerstabil sein, bei Wärmeeinwirkung von etwa 100 bis 200°C aufspalten und mit den im Harzverband vorhandenen reaktiven Hydroxyl- und/oder Carboxylgruppen vernetzen können.

Blockierte Polyisocyanate werden durch Umsetzung von Polyisocyanaten mit monofunktionellen Verbindungen mit aktivem Wasserstoff erhalten.

Als Polyisocyanate, die einzeln oder im Gemisch in blockierter Form als Vernetzungsmittel eingesetzt werden können, eignen sich beliebige organische Di- und/oder Polyisocyanate mit aliphatisch, cycloaliphatisch, araliphatisch und/oder aromatisch gebundenen, freien Isocyanatgruppen.

Bevorzugt werden Polyisocyanate, die etwa 3 bis 36, besonders bevorzugt 8 bis 15 Kohlenstoffatome enthalten. Beispiele für geeignete Diisocyanate sind Toluylendiisocyanat, Diphenylmethandiisocyanat und insbesondere Hexamethylendiisocyanat, Tetramethylxylylendiisocyanat, Isophorondiisocyanat, Dicyclohexylmethandiisocyanat und Cyclohexandiisocyanat.

Sehr gut geeignet sind beispielsweise "Lackpolyisocyanate" auf Basis von Hexamethylendiisocyanat, Isophorondiisocyanat und/oder Dicyclohexylmethandiisocyanat, wobei es sich dabei um die an sich bekannten Biuret, Urethan-, Uretdion- und/oder Isocyanuratgruppen aufweisenden Derivate dieser Diisocyanate handelt.

Monofunktionelle Verbindungen mit aktivem Wasserstoff, die zur Blockierung der Polyisocyanate eingesetzt werden können sind dem Fachmann bekannt. Beispielsweise können CH-acide Verbindungen wie Acetylaceton; CH-acide Ester wie Acetessigsäurealkylester, Malonsäuredialkylester; (cyclo)aliphatische Alkohole wie n-Butanol, 2-Ethylhexanol, Cyclohexanol; Glykolether wie Butylglykol, Butyldiglykol; Phenole wie Kresol, tert.-Butylphenol; Diaminoalkohole wie Dimethylaminoethanol; Oxime wie Butanonoxim, Acetonoxim, Cylcohexanonoxim; Lactame wie ε-Caprolactam oder Pyrrolidon-2; Imide; Hydroxyalkylester; Hydroxamsäure und deren Ester; Pyrazole verwendet werden.

Die Polyisocyanate können innerhalb eines Moleküls mit gleichen oder verschiedenen Blockierungsmitteln blockiert sein. Es können auch Gemische von gleich oder unterschiedlich blockierten Polyisocyanaten verwendet werden.

Die Melamin-Formaldehydharze vernetzen beispielsweise mit den Hydroxylgruppen des Polyesterharzes unter Bildung von Ethergruppen. Beispielsweise handelt es sich bei diesen Vernetzern um nach bekannten technischen Verfahren in Gegenwart von Alkoholen wie Methanol, Ethanol, Propanol, Butanol oder Hexanol mit Aldehyden, insbesondere Formaldehyd, kondensierte Triazine wie Melamin oder Benzoguanamin. Bevorzugt handelt es sich dabei um Methanol-veretherte Melaminharze wie z.B. Cymel 325®, Cymel 327®, Cymel 350®, Cymel 370®, Maprenal MF 927®; Butanol- oder Isobutanol-veretherte Melaminharze wie z.B. Setamin US 138® oder Maprenal MF 610®; mischveretherte Melaminharze, sowie insbesondere um Hexamethylolmelaminharze wie z.B. Cymel 301® oder Cymel 303®.

Zur Pigmentierung des anodischen Elektrotauchlacks können übliche Pigmente, Füllstoffe, Korrosionsinhibitoren und Lackhilfsmittel verwendet werden, solange sie mit Wasser im schwach basischen bis neutralen pH-Bereich keine störenden Reaktionen eingehen und keine wasserlöslichen störenden Fremdionen einschleppen.
Bei den Pigmenten und Füllstoffen handelt es sich dabei um die üblichen in der Lackindustrie einsetzbaren Füllstoffe und anorganischen oder organischen farb- und/oder effektgebenden Pigmente.

Beispiele für anorganische farbgebende Pigmente sind Titandioxid, mikronisiertes Titandioxid, Zinksulfid, Lithopone, Bleicarbonat, Bleisulfat, Zinnoxid, Antimonoxid, Eisenoxide, Chromgelb, Nickeltitangelb, Chromorange, Molybdatrot, Mineralviolett. Ultramarinviolett, Ultramarinblau, Kobaltblau, Chromoxidgrün und Ruß. Beispiele für farbgebende organische Pigmente sind solche aus den Gruppen von Azo-, Phthalocyanin-, Chinacridon-,Perylen-, Perinon-, Anthrachinon-, Thioindigo- und Diketopyrrolopyrrolpigmenten. Beispiele für effektgebende Pigmente sind Metallpigmente, beispielsweise aus Aluminium, Kupfer oder anderen Metallen; Interferenzpigmente wie beispielsweise metalloxidbeschichtete Metallpigmente oder metalloxidbeschichtete Glimmer; Perlglanzpigmente und optisch variable Pigmente (OVP).

Beispiele für Füllstoffe sind Calziumcarbonat, Bariumsulfat, Talkum, Siliziumdioxid, Aluminiumsilikate, Magnesiumsilikate, Glimmer, Aluminiumhydroxyd und Kieselsäuren. Die Füllstoffe können auch mit organischen Verbindungen modifiziert (gecoatet) sein. Beispiele für derartige modifizierte Füllstoffe sind gecoatetes mikronisiertes Aluminiumoxid oder gecoatetes mikronisiertes Silziumdioxid.

Die Pigmente können in üblicher, dem Fachmann bekannter Weise, in einem Teil der Bindemitteldispersion oder in einem üblichen Pastenharz dispergiert werden. Die Zusammensetzung der Bestandteile für eine optimale Dispergierung wird dabei für jedes Dispergieraggregat gesondert bestimmt. Als Dispergieraggregate eignen sich beispielsweise Rührscheibengeräte, Dreiwalzenstühle, Kugelmühlen oder bevorzugt Sand- oder Perlmühlen. Bei der Dispergierung können auch übliche Hilfsmittel wie beispielsweise Antischaummittel, Dispergierhilfsmittel und Mittel zur Rheologiesteuerung zugesetzt werden.

Der erfindungsgemäß eingesetzte anodisch abscheidbare wäßrige Elektrotauchlack kann auch übliche Lackhilfs- und Zusatzstoffe wie Biozide, Lichtschutzmittel, Verlaufsmittel enthalten. Es können auch weitere hydrophile und/oder hydrophobe Polymere mit oder ohne reaktiven Gruppen oder Mischungen dieser Polymeren mitverwendet werden.

Beispiele für solche Polymere sind gesättigte oder ungesättigte Acrylat-, Polyurethanoder Polyesterharze, acrylmodifizierte Acrylat-, Polyurethan- oder Polyesterharze, Epoxidharze, Aminoplastharze, Phenolharze, Kohlenwaserstoffharze, silikonmodifizierte Acrylat-, Polyurethan- oder Polyesterharze, Copolymere aus Butadien und Acrylnitril, Styrol-Allyalkohol-Copolymere.

Die anodischen Elektrotauchlacke werden, gegebenenfalls nach Zugabe von weiterem Neutralisationsmittel, durch Verdünnen mit vollenentsalztem Wasser in den Verarbeitungszustand (Elektrotauchlackbad) überführt.

Im betriebsbereiten Zustand weisen die Elektrotauchlackbäder beispielsweise einen Festkörpergehalt von 8 bis 25 Gew.%, bevorzugt von 10 bis 15 Gew.%. auf. Der MEQ-Wert beträgt bevorzugt von 30 bis 150, besonders bevorzugt von 40 bis 80. Der Gehalt an organischen Lösemitteln beträgt beispielsweise von 0,1 bis 10 Gew.%, bevorzugt unter 5 Gew.%.

Die Abscheidung erfolgt in üblicher Weise, beispielsweise durch Anlegen einer Gleichspannung von 50 bis 500 Volt, bei einer Beschichtungszeit von 0,5 bis 5 Minuten und bei einer Temperatur des Elektrotauchlackbades von 15 bis 35 °C.

Das erfindungsgemäße Verfahren eignet sich zur Beschichtung von Werkstücken mit elektrisch leitender Oberfläche, insbesondere zur Grundierung und Einschichtlackierung von Haus- und Elektrogeräten, Stahlmöbeln, Bauelementen, Bau- und Landmaschinen, Automobilkarossen und Automobilzubehörteilen.

Durch die erfindungsgemäße Verfahrensweise wird eine Verbesserung des Kantenschutzes erzielt, es wird eine Einstellung des Mattierungsgrades ermöglicht, wobei auch ein guter Umgriff erhalten wird. Die erfindungsgemäß eingesetzten Mischester weisen eine hohe Kompatibilität mit anionischen Bindemitteln auf, wodurch eine höhere Badstabilität sowie eine geringere Rücklösung des abgeschiedenen Lackmaterials in Spülzonen einer Anlage oder bei möglichen Störfällen, wie Stromausfall, bei denen ein beschichtetes Substrat in dem Elektrotauchbad ruht, erzielt wird, als dies mit den üblich eingesetzten Phosphorsäureepoxyestern möglich ist.

### Beispiel 1

### Herstellung eines Phosphorsäure-Epoxyesters

In ein Reaktionsgefäß mit Rührer, Thermometer und Rückflußkühler werden 26,44 Gew.% sek. Butanol vorgelegt und auf 80 bis 100°C aufgeheizt. In diese Vorlage werden 38,51 Gew.% Epikote® 1001 (Fa. Shell) (Kondensationsprodukt aus Bisphenol A und Epichlorhydrin, Epoxyequivalentgewicht 450 bis 500) eingestreut und unter Rühren bei 80 bis 100°C vollständig gelöst. Es wird auf 80°C abgekühlt und portionsweise ein Gemisch aus 1,40 Gew.% 85%iger Phosphorsäure und 0,31 Gew.% vollentsalztem Wasser zugegeben. Unter Einhaltung eines schwachen Rückflusses wird auf 80 bis 110°C geheizt und bei dieser Temperatur gehalten, bis eine Säurezahl von 22 bis 26 mg KOH/g erreicht ist. Nach Kühlen auf 80 bis 90°C werden 1,87 Gew.% 50%iges Dimethylethanolamin zugegeben und 30 Minuten homogenisiert. Anschließend werden 30,56 Gew.% vollentsalztes Wasser zügig zugegeben und 30 Minuten gerührt, wobei die Temperatur auf 25 bis 35°C absinkt.

### Kennzahlen:

- Festkörper (30 Minuten 150°C):: 37 bis 41 %
- MEQ-Amin:: 35 bis 38 Milliequivalent Amin/100g Festharz

### Beispiel 2

### Herstellung einer wäßrigen Polyesterharzdispersion ohne Härterharz für die anodische Elektrotauchlackierung

Zu 57,00 Gewichtsteilen eines Polyesterharzes mit einer Säurezahl von 49 und einer Hydroxylzahl von 60 (hergestellt aus 26,17 Gewichtsteilen Neopentylglykol, 5,43 Gewichtsteilen Trimethylolpropan, 10,83 Gewichtsteilen Isophthalsäure, 21,45 Gewichtsteilen lsodekanol und 36,12 Gewichtsteilen Trimellitsäureanhydrid) wird in einem Reaktionsgefäß mit Rührer, Thermometer und Rückflußkühler bei 100°C eine Mischung aus 1,80 Gewichtsteilen Diethanolamin und 3 Gewichtsteilen vollentsalztem Wasser zugegeben und 10 Minuten homogen eingerührt, anschließend werden 0,15 Gewichtsteile eines handelsüblichen Biozides ebenfalls 10 Minuten homogen eingerührt. Unter Rühren werden 38,05 Gewichtsteile vollentsalztes Wasser zugegegeben. Die Mischung wird 90 Minuten bei 80°C gerührt und anschließend zügig auf 25°C abgekühlt.

### Kennzahlen:

- Festkörper (30 Minuten 180°C):: 53 bis 57%
- MEQ-Amin:: 30 bis 35 Milliequivalent Amin/100 g Festharz

### Beispiel 3

### Herstellung einer wäßrigen Bindemitteldispersion für die anodische Elektrotauchlackierung mit Härterharz

Zu 87,90 Gewichtsteilen der unter 2 hergestellten Polyesterharzdispersion werden unter Rühren 12,10 Gewichtsteile des handelsüblichen Melaminharzes Cymel 303 (Fa. Cytec) zugegeben und danach 30 Minuten homogenisiert.

### Kennzahlen:

- Festkörper (berechnet):: 60,4 %
- MEQ-Amin:: 26 bis 30 Milliequivalent Amin/100 g Festharz

### Beispiel 4

### Herstellung einer wäßrigen Bindemitteldispersion für die anodische Elektrotauchlackierung mit Härterharz und Phosphorsäureepoxyester.

Zu 78,20 Gewichtsteilen der unter 2 hergestellten Polyesterharzdispersion werden unter Rühren 10,80 Gewichtsteile des handelsüblichen Melaminharzes Cymel 303 (Fa. Cytec) und 11,00 Gewichtsteile des in Beispiel 1 hergestellten Phosphorsäure-Epoxyesters zugegeben und danach 30 Minuten homogenisiert.

### Kennzahlen:

- Festkörper (berechnet):: 58,1%
- MEQ-Amin:: 31 bis 35 Milliequivalent Amin/100 g Festharz

### Bespiel 5

### Herstellung einer wäßrigen schwarzen Pigmentpaste

Zur Herstellung von 100 kg einer schwarzen Pigmentpaste werden 24,50 kg Pastenharz 75%ig in einem Dissolver vorgelegt und mit 2,18 kg einer 50%igen Diisopropanolaminlösung neutralisiert und mit 40,90 kg vollentsalztem Wasser verdünnt.

Anschließend werden in angegebener Reihenfolge 2,50 kg eines Polybutylens, 2,21 kg eines Channelrußes, 2,21 kg eines Furnacerußes, sowie 25,50 kg Aluminiumhydrosilikat unter Rühren zugegeben.

Das so erstellte Mahlgut wird 15 Minuten bei 40°C gerührt. Nach einer Quellzeit von 12 h wird das Mahlgut auf einer Coball-Mill unter vorgegebenen Bedingungen dispergiert.

### Kennzahlen:

- Festkörper (berechnet):: 50 %
- MEQ-Amin:: 12 - 17 Milliequivalent Amin/100 g Festharz

### Beispiel 6

### Herstellung eines Elektrotauchbades mit Phosphorsäureepoxyester

1452,50 g vollentsalztes Wasser werden in einem 2 l Becherglas vorgelegt. Nacheinander werden 5,00 g Diisopropanolamin 50%ig und 5,00 g Dimethylethanolamin unter Rühren zugegeben. Schrittweise werden 385,80 g der in Beispiel 4 hergestellten Dispersion mit Härterharz und Phosphorsäuureepoxyester unter Rühren zugegeben. Nach einer Homogenisationszeit von 10 Minuten werden 151,70 g der in Beispiel 5 hergestellten Pigmentpaste langsam unter Rühren zugegeben.

Nach einer Homogenisationszeit von etwa 1 Stunde ist das Elektrotauchbad beschichtungsbereit.

### Kennzahlen:

- Festkörper (berechnet ):: 15 %
- MEQ-Amin:: 51,2 Milliequivalent Amin/100 g Festharz

### Beispiel 7

### Herstellung eines Elektrotauchbades ohne Phosphorsäureepoxyester (Vergleich)

1467,20 g vollentsalztes Wasser werden in einem 2 l Becherglas vorgelegt. Nacheinander werden 5,00 g Diisopropanolamin 50%ig und 5,00 g Dimethylethanolamin unter Rühren zugegeben. Schrittweise werden 371,1 g der unter 3. hergestellten Dispersion mit Härterharz unter Rühren zugegeben. Nach einer Homogenisationszeit von 10 Minuten werden 151,70 g der unter 5. hergestellte Pigmentpaste langsam unter Rühren zugegeben.

Nach einer Homogenisationszeit von etwa 1 Stunde ist das Elektrotauchbad beschichtungsbereit.

### Kennzahlen:

- Festkörper (berechnet):: 15 %
- MEQ-Amin:: 49,0 Milliequivalent Amin/100 g Festharz

### Beispiel 8

### Prüfablauf und Testergebnisse

Mit den in den Beispielen 6 und 7 erstellten Elektrotauchlackbädern werden Prüfbleche beschichtet und eingebrannt.
- Vorbehandlung:: Eisenphosphatierung (Unibond WH/W)
- Spannung:: 220 ± 40V
- Elektrodenabstand:: 5 cm
- Beschichtungszeit:: 180 s
- Badtemperatur:: 30 °C
- Einbrennbedingungen:: 25 Min. 180°C im Laborumluftofen
- Schichtdicke:: 30 ± 3 µm

- Prüfungen:: Glanzgradmessung nach DIN 67530 60°Geometrie
120 h Salzsprühzest nach DIN 50021 SS
240 h Salzsprühtest nach DIN 50021 SS

### Testergebnisse

| | Erf. Beispiel 6 | Vergl. Beispiel 7 |
|---|---|---|
| Glanzgradmessung nach DIN 67530 60°Geometrie 120 h Salzsprühzest nach DIN 50021 SS Auswertung nach ISO 4628 | 19 Einheiten | 45 Einheiten |
| Flächenrost x | 0 | 0 - 1 |
| Kantenrost xx | 0 - 1 | 4 |
| x 0 = kein Flächenrost | | |
| 5 = starker Flächenrost | | |
| xx 0 = kein Kantenrost | | |
| 5 = starker Kantenrost (100 %) | | |

## Patentansprüche

1. Verfahren zur anodischen Elektrotauchlackierung von leitfähigen Oberflächen durch Eintauchen in ein wäßriges anodisches Elektrotauchlackbad und Schalten als Anode, **dadurch gekennzeichnet, daß** man ein wäßriges anodisches Elektrotauchlackbad verwendet, das 1 bis 15 Gew.%, bezogen auf den Bindemittelfestkörper des Elektrotauchlackbades eines oder mehrerer Phosphorsäure-Epoxiester und/oder Phosphonsäure-Epoxiester mit einer Säurezahl von 10 bis 50 enthält, die durch Umsetzung von einer oder mehreren monomeren, oligomeren oder polymeren Epoxidverbindung(en) mit Phosphorsäure oder Phosphonsäuren oder deren Estern oder Mischungen davon in Gegenwart von einem oder mehreren Alkoholen erhalten werden.

2. Verfahren nach Anspruch 1, **dadurch gekennzeichnet, daß** Phosphorsäurediethylester, Phosphorsäuretriethylester, Phosphorsäuredibutylester, Phosphorsäuretributylester, Hydroxymethanphosphonsäure, Hydroxethanphosphonsäure, Vinylphosphonsäure, Allylphosphonsäure, Benzylphosphonsäurediethylester und/oder o-Phosphorsäure zur Umsetzung verwendet werden.

3. Verfahren nach Anspruch 1 oder 2, **dadurch gekennzeichnet, daß** als Epoxidverbindungen solche mit im Mittel mindestens einer, vorzugweise mindestens zwei Epoxidgruppen pro Molekül und einem Epoxiäquivalentgewicht von 90 bis 4000 g/Equ. eingesetzt werden.

4. Wäßriges Elektrotauchlackbad mit einem Gehalt an einem oder mehreren filmbildenden Bindemitteln, sowie gegebenenfalls Vernetzern, Pigmenten, Füllstoffen, organischen Lösemitteln und/oder lacküblichen Additiven, **dadurch gekennzeichnet, daß** es 1 bis 15 Gew.-%. bezogen auf den Bindemittelfestkörper, eines oder mehrerer Phosphorsäure-Epoxiester und/oder Phosphonsäure-Epoxiester mit einer Säurezahl von 10 bis 50 enthält, die durch Umsetzung von einer oder mehreren monomeren, oligomeren oder polymeren Epoxidverbindung(en) mit Phosphorsäure und/oder Phosphonsäuren oder deren Estern in Gegenwart von einem oder mehreren Alkoholen hergestellt wurden.

5. Verwendung von Phosphorsäure-Epoxiestern und/oder Phosphonsäure-Epoxiestern mit einer Säurezahl von 10 bis 50, die durch Umsetzung von einer oder mehreren monomeren, oligomeren oder polymeren Epoxidverbindung(en) mit Phosphorsäure und/oder Phosphonsäuren oder deren Estern in Gegenwart von einem oder mehreren Alkoholen hergestellt wurden als Additive für Elektrotauchlackbäder.

## Claims

1. Process for the anodic electrophoretic lacquering of conductive surfaces by immersion in an aqueous anodic electrophoretic bath and connection as an anode, **characterised in that** an aqueous anodic electrophoretic bath is used that contains 1 to 15 wt.%, relative to the binder solids in the electrophoretic bath, of one or more phosphoric acid epoxy esters and/or phosphonic acid epoxy esters having an acid value of 10 to 50, which are obtained by reacting one or more monomeric, oligomeric or polymeric epoxy compounds with phosphoric acid or phosphonic acids or esters or mixtures thereof in the presence of one or more alcohols.

2. Process according to claim 1, **characterised in that** phosphoric acid diethyl ester, phosphoric acid triethyl ester, phosphoric acid dibutyl ester, phosphoric acid tributyl ester, hydroxymethane phosphonic acid, hydroxyethane phosphonic acid, vinyl phosphonic acid, allyl phosphonic acid, benzyl phosphonic acid diethyl ester and/or o-phosphoric acid are used for the reaction.

3. Process according to claim 1 or 2, **characterised in that** examples having on average at least one, preferably at least two epoxy groups per molecule and an epoxy equivalent weight of 90 to 4000 g/eq. are used as epoxy compounds.

4. Aqueous electrophoretic bath containing one or more film-forming binders and optionally crosslinkers, pigments, fillers, organic solvents and/or conventional lacquer additives, **characterised in that** it contains 1 to 15 wt.%, relative to the binder solids, of one or more phosphoric acid epoxy esters and/or phosphonic acid epoxy esters having an acid value of 10 to 50, which were produced by reacting one or more monomeric, oligomeric or polymeric epoxy compounds with phosphoric acid and/or phosphonic acids or esters thereof in the presence of one or more alcohols.

5. Use of phosphoric acid epoxy esters and/or phosphonic acid epoxy esters having an acid value of 10 to 50, which were produced by reacting one or more monomeric, oligomeric or polymeric epoxy compounds with phosphoric acid and/or phosphonic acids or esters thereof in the presence of one or more alcohols, as additives for electrophoretic baths.

## Revendications

1. Procédé pour le trempage électrophorétique anodique de surfaces conductrices, par immersion dans un bain aqueux de trempage électrophorétique anodique et montage comme électrode, **caractérisé en ce que** l'on utilise un bain aqueux de trempage électrophorétique anodique, qui contient 1 à 15% en poids, sur base du corps solide de liant du bain de trempage électrophorétique, d'un ou de plusieurs ester d'époxyde d'acide phosphorique et/ou ester d'époxyde d'acide phosphonique avec un indice d'acide allant de 10 à 50, qui sont obtenus par réaction d'un ou de plusieurs composés époxyde monomères, oligomères ou polymères avec l'acide phosphorique ou l'acide phosphonique ou leurs esters ou des mélanges de ceux-ci, en présence d'un ou de plusieurs alcools.

2. Procédé selon la revendication 1, **caractérisé en ce que** l'on utilise pour la réaction l'ester diéthylique de l'acide phosphorique, l'ester triéthylique de l'acide phosphorique, l'ester dibutylique de l'acide phosphorique, l'ester tributylique de l'acide phosphorique, l'acide hydroxyméthanephosphonique, l'acide hydroxyéthane-phosphonique, l'acide vinylphosphonique, l'acide allylphosphonique, l'ester diéthylique de l'acide benzylphosphonique et/ou l'acide o-phosphorique.

3. Procédé selon la revendication 1 ou 2, **caractérisé en ce que** l'on met en oeuvre comme composé époxyde, ceux avec en moyenne, au moins un, de préférence deux radicaux époxyde par molécule et un poids en équivalent époxyde allant de 90 à 4000 g/éq.

4. Bain aqueux de trempage électrophorétique avec une teneur en un ou plusieurs liants filmogènes, ainsi que le cas échéant, des réticulants, pigments, charges, solvants organiques et/ou additifs usuels pour les laques, **caractérisé en ce qu'**il contient 1 à 15% en poids, sur base du corps solide de liant, d'un ou de plusieurs esters d'époxyde d'acide phosphorique et/ou esters d'époxyde d'acide phosphonique avec un indice d'acide allant de 10 à 50, qui sont obtenus par réaction d'un ou de plusieurs composés époxyde monomères, oligomères ou polymères avec l'acide phosphorique et/ou l'acide phosphonique ou leurs esters en présence d'un ou de plusieurs alcools.

5. Utilisation d'esters d'époxyde d'acide phosphorique et/ou d'esters d'époxyde d'acide phosphonique avec un indice d'acide allant de 10 à 50, qui sont préparés par réaction d'un ou de plusieurs composés époxyde monomères, oligomères ou polymères avec l'acide phosphorique et/ou l'acide phosphonique ou leurs esters, en présence d'un ou de plusieurs alcools, comme additif pour un bain de trempage électrophorétique.
